# EUROPEAN PATENT SPECIFICATION

(11) **EP 2 009 419 B1**
(45) Date of publication and mention of the grant of the patent: **23.12.2009**
(21) Application number: 07110951.6
(22) Date of filing: 25.06.2007
(51) Int. Cl.: G01N 1/06, G01N 1/28, G01N 1/31, G01B 11/00

(54) **Measuring the thickness of organic samples**
Messung der Dicke organischer Proben
Mesure de l'épaisseur d'échantillons organiques

(43) Date of publication of application: 31.12.2008
(73) Proprietor: Milestone S.r.l., 24010 Sorisole (BG) (IT)
(72) Inventor: Visinoni, Francesco, 24010 Sorisole (BG) (IT)
(74) Representative: Rupp, Christian

(56) References cited:
- EP-A- 0 592 997
- DE-A1- 19 802 499
- US-A- 5 609 083
- US-A- 5 678 465
- US-A1- 2002 178 931
- NOËL ZIEBARTH ET AL: "Fibre-optic focus-detection system for non-contact, high-resolution thickness measurement of transparent tissues; Focus-detection system for non-contact thickness measurement" JOURNAL OF PHYSICS D. APPLIED PHYSICS, INSTITUTE OF PHYSICS PUBLISHING, BRISTOL, GB, vol. 38, no. 15, 7 August 2005 (2005-08-07), pages 2708-2715, XP020083257 ISSN: 0022-3727
- J. MICHAEL LEE AND SHARI E. LANGDON: "Thickness measurement of sof tissue biomaterials: A comparison of five techniques" J. BIOMECHANICS, vol. 29, no. 6, 1996, pages 829-832, XP002459717
- ANONYMOUS: "CheckLite: Non-contact automatic thickness measuring device for organic specimens"[Online] 22 November 2007 (2007-11-22), XP002459718 Retrieved from the Internet: URL:www.milestonemedsrl.com> [retrieved on 2007-11-22]

## Description

### Field of the invention

This invention relates to a quality control method for improving histoprocessing of organic tissue samples.

### Background of the invention

In the field of pathology, it is customary to prepare slice-shaped tissue samples for processing, staining, and histopathologic analysis. One practice of examining fresh or fixed patient tissue samples is referred to as "grossing" and involves preparation of relatively thick tissue samples, i.e. samples in the order of 0.5 to 4 mm thickness are considered the norm. In certain cases, the specimens may have a thickness up to 10mm.

The standardization of cassettes of an internal limit of 5 mm thickness is considered to be the physical limit of tissue thickness for routine histoprocessing.

During the grossing process, representative tissue sample slices are taken from various sites of the tissue for subsequent histoprocessing steps such as: fixing in formalin, dehydrating, clearing and ultimately impregnating in paraffin wax. This enables paraffin sections to be cut and stained for microscopical examination and diagnosis.

The thickness and uniformity of the tissue sample slice determine histoprocessing time and quality of the histoprocessed tissue sample slice for diagnosis.

The current practice in routine grossing is to rely on the skill of an experienced pathologist or pathology assistant for estimating the tissue sample slice thickness and maintaining its uniform thickness during the cutting process. This process is done manually which involves grasping the tissue with a pair of forceps at a distal end, holding the tissue down at the point of contact with the forceps, and then cutting. Alternatively, the tissue is sandwiched between single pronged forceps or fingers. The pathologist then cuts through the tissue without any physical guide for ensuring a desired thickness and its uniformity. As is evident, this practice normally does not produce tissue sample slices of a predetermined uniform thickness. The process is further complicated when cutting very soft tissues in a fresh state or fatty tissue, which are extremely difficult to cut to a predetermined thickness even for the most experienced pathologist.

Lack of uniformity in the thickness of a tissue sample block results in poor histoprocessing rendering a subsequent microscopic diagnosis difficult if not impossible. It is, therefore, essential to cut a tissue sample slice having a uniform - preferably less than 3 mm - thickness in order to ensure consistent histoprocessing quality that does not jeopardize subsequent microscopic diagnosis.

In U.S. Pat. No. 6,513,803 issued Feb. 04, 2003, Morales *et al*. disclose a grossing board having one or more tissue receiving depressions formed therein. A knife guiding assembly is provided to guide a knife or scalpel blade along a surface of the grossing board to cut the tissue sample to a predetermined thickness defined by the depth of the respective depression. While the grossing board facilitates the preparation of some tissue samples, tissues that are very soft, smooth and slippery, such as those having a high fat content, are difficult to hold in the receiving depressions of the grossing board. Furthermore, the receiving depressions are difficult to clean resulting in an increased risk of cross contamination between different samples.

In U.S. Patent Application published Apr. 01, 2004 as US 2004/0061269, Morales discloses a pathology grossing tool comprising first and second tine arrays for engaging and holding the tissue. The first and second tine arrays define a slice thickness there between when a slice is prepared by cutting parallel to the first and second tine array using the tine arrays as guides for a cutting tool. Unfortunately, by engaging the tissue with the tine array the tissue structure is distorted in the vicinity of the tines and, further, the tissue is compressed between the tines resulting in an uneven slice thickness after cutting. Furthermore, improper engagement of the tines with the tissue, in particular, towards the end of the cutting process, allows movement of the tissue sample due to shearing stress induced by the moving cutting tool also resulting in an uneven thickness of the sample slice.

A low-cost, high resolution fibre optic system for non-contact measurements of ocular tissues is described in Journal of Physics D: Applied Physics, 38 (2005), 2708-2715. The system allows measurements with a resolution of 4 microns and a precision of 2 microns.

DE 19802499 A1 to Sferlea relates to a process and apparatus for non-contact measurements of the thickness of an object. The apparatus comprises two measurement sensors to determine the difference between the surface where the object lies and the upper surface of the object.

EP 0592997 A2 to Becton Dickinson and Company describes an apparatus and method for measuring the thickness of a tissue section using an automated image analysis system.

A technique for measuring the thickness of a conveyed sheet type food using an optical or ultrasonic displacement metre is described in US 2002/0178931A1 to Motokazu et al.

US 5,609,083 to Glass Ultra Micro Trading company relates to a method for sectioning a specimen by means of a microtome comprising parameters which can be varied to optimise the sectioning function.

US 5,678,465 to Krumdieck also relates to a microtome-based tissue thickness measuring apparatus.

### Object of the invention

It is therefore an object of the invention to provide a way in which the thickness of a sample can be checked easily in order to facilitate histoprocessing.

### Summary of the invention

Accordingly, this object is achieved by means of the features of the independent claims. The dependent claims develop further the central idea of the present invention.

### Figures

There follows a detailed description of preferred embodiments of the present invention, to be read together with the accompanying drawings, wherein:
- **fig. 1** is a schematic representation of a device according to the invention
- **fig. 2** is a more detailed depiction of the measurement station.

### Detailed description of the invention

The present invention relates to a quality control method for improving histoprocessing of an organic tissue sample. Histoprocessing implies all the processes which have to be carried out on a sample after grossing and prior to further investigation. The processing steps involve
- treatment with formalin or saline solution to stabilise the tissue
- dehydration of the sample (usually with alcohol)
- removal of lipids by a solvent
- infiltration and impregnation of the tissue with a supporting medium.

The present method comprises the first step of setting a maximum organic tissue sample thickness value. This is a theoretical maximum thickness value.

For histoprocessing, the samples may vary from 1 to 10mm in thickness. Typically, the samples are from 2 to 5mm in thickness. For this thickness range, standard biopsy cassettes are normally used. The maximum thickness of samples may vary up to 10mm, in which case dedicated histoprocessing cassettes are used. The samples are typically placed in cassettes which are dipped in the appropriate solvents sequentially.

In order to facilitate the processing, the maximum thickness is set to 5mm, preferably 3mm, most preferably 2mm, even 1mm.

According to the invention, once a maximum organic tissue sample thickness value is set, the histoprocessing parameters are set as a function of the maximum tissue thickness. The parameters comprise the type of solvent(s), the amount, the temperature, the time of solvent treatment etc. Typical solvents used for processing the samples include formalin or formalin derivatives, alcohol solutions (such as ethanol, isopropanol etc.), wax etc. These solvents are commonly used in the art and known to the skilled person.

Thus for samples having a set maximum thickness, the typical processing parameters are set to:

| Set maximum thickness (mm) | Fixation in formalin or formalin derivatives: time, temperature | Solution of alcohols, time, temperature | Vaporisation: time, pressure | Wax impregnation: time, temperature, pressure |
|---|---|---|---|---|
| **1** | 15 min, 50°C | 15 min, 50-70°C | 1-2 min, 600 mBar | 20-25 min, 60-70°C, 100-400mBar |
| **2** | 20 min, 50°C | 30 min, 60-70°C | 1-2 min, 600 mBar | 45 min, 60-70°C, 100-500mBar |
| **3** | 30 min, 50°C | 80 min, 60-70°C | 1-2 min, 600 mBar | 70-75 min, 60-70°C, 100-500mBar |
| **4** | 40 min, 50°C | 130-140 min, 60-70°C | 1-2 min, 600 mBar | 85-90 min, 60-70°C, 100-500mBar |
| **5** | 60 min, 50°C | 150 min, 60-70°C | 1-2 min, 600 mBar | 120 min, 60-70°C, 100-500mBar |
| **6** | 70 min, 50°C | 190-200 min, 60-70°C | 1-2 min, 600 mBar | 130-140 min, 60-70°C, 100-500mBar |

The solution of alcohols may be replaced by a solution of ethanol followed by a solution of isopropanol. The parameters are then set as shown in the table below:

| Set maximum thickness (mm) | Fixation in formalin or formalin derivatives: time, temperature | Ethanol: time, temperature | Isopropanol: time, temperature | Vaporisati on : time, pressure, temperature | Wax : time, temperature, pressure |
|---|---|---|---|---|---|
| **1** | 15 min, 50°C | 15 min, 60-70°C | 16 min, 60-70°C | 1-2 min, 600 mBar, 70°C | 23 min, 60-70°C |
| **2** | 20 min, 50°C | 20 min, 60-70°C | 28 min, 60-70°C | 1-2 min, 600 mBar, 70°C | 45 min, 60-70°C |
| **3** | 30 min, 50°C | 25 min, 60-70°C | 72 min, 60-70°C | 1-2 min, 600 mBar, 70°C | 74 min, 60-70°C |
| **4** | 40 min, 50°C | 30 min, 60-70°C | 102 min, 60-70°C | 1-2 min, 600 mBar, 70°C | 89 min, 60-70°C |
| **5** | 60 min, 50°C | 40 min, 60-70°C | 112 min, 60-70°C | 1-2 min, 600 mBar, 70°C | 120 min, 60-70°C |
| **6** | 70 min, 50°C | 50 min, 60-70°C | 132 min, 60-70°C | 1-2 min, 600 mBar, 70°C | 135 min, 60-70°C |

Alternatively, a solution of alcohols followed by isopropanol may be used after fixation. This is preferably used in the case of fatty tissues. The parameters used are shown below:

| Set maximum thickness (mm) | Fixation in formalin or formalin derivatives: time, temperature | Solution of alcohols: time, temperature | Isopropanol: time, temperature | Vaporisati on : time, pressure, temperature | Wax : time, temperatu re, pressure |
|---|---|---|---|---|---|
| **3** | 30 min, 50°C | 50 min, 60-70°C | 20 min, 60-70°C | 1-2 min, 600 mBar | 74 min, 60-70°C |
| **4** | 40 min, 50°C | 105 min, 60-70°C | 25 min, 60-70°C | 1-2 min, 600 mBar, | 89 min, 60-70°C |
| **5** | 60 min, 50°C | 120 min, 60-70°C | 30 min, 60-70°C | 1-2 min, 600 mBar, 70°C | 120 min, 60-70°C |
| **6** | 70 min, 50°C | 140 min, 60-70°C | 60 min, 60-70°C | 1-2 min, 600 mBar | 135 min, 60-70°C |

Grossing is then carried out, according to the present method. This may be done using any of the tools known to the skilled person. Because it is very difficult for the skilled person to cut an even thin slice of tissue and, because it is also difficult for the skilled person to estimate the exact thickness of the sample, it is important to measure the thickness of the sample by reliable means. This is achieved in the present invention by using a thickness measurement device comprising a contactless measuring means and comprising means for automatically indicating whether the thickness of the cut sample is above or below the set threshold value.

It is important, however, that prior to measuring, the set maximum thickness value is set as a threshold value on the thickness measurement device.

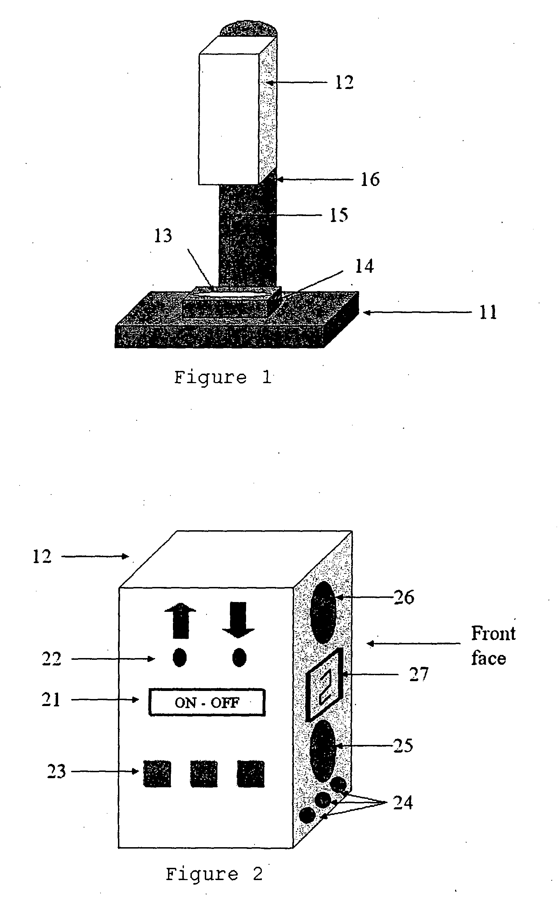

A thickness measurement device which can be used in the present method is illustrated in figure 1.

Referring to figure 1, the tissue sample measurement device pertaining to the present invention comprises a base plate 11 for placing the sample 13 and a contactless thickness measuring means for measuring the distance from the top of the surface of the sample to the base plate.

The thickness measuring means present in the device of the present invention is contactless which means that no interaction of a user with the sample is required to carry out the measurement. This helps in preventing contamination of the sample. Contactless measuring means may include distance measuring transducers such as laser, ultrasound or optical transducers etc. It is preferably a laser-based measuring means. Thus, according to a preferred embodiment, the laser-based measuring means comprises a laser 15, the direction of which is perpendicular to the base plate. Furthermore, the laser-based measuring means comprises a laser sensor having a resolution of 50-100 microns, preferably 80 microns.

In the preferred embodiment shown in figure 1, the thickness measuring means is placed above the base plate 11. The measuring means is preferably contained in a measurement station 12 which may be adjustable in height above the sample 13. To adjust the height of the measurement station, said measurement station is preferably fixed on a moveable support 16.

The device preferably comprises means for switching the device on and off 21. Furthermore, it may comprise means for presetting a threshold thickness value 22. This can be useful, for example, when a sample should not go beyond or below a certain thickness. Thus, depending on the subsequent application of the sample, the threshold thickness may be increased or decreased.

Preferably, the device also comprises means for indicating transgression of a preset threshold thickness value. The means for indicating transgression may be visual and/or acoustic. For instance, this may be in the form of a red light, a flashing light, a beep, acoustic signals with different frequencies etc. Preferably, as shown in Fig. 2, the measuring station is provided with two lights 25 and 26, one green and one red, which are activated when the sample is below or above the threshold thickness value respectively.

In the method of the invention, so long as the measured thickness of the cut sample is below the set threshold value, the processing of the samples using the histoprocessing parameters determined above is carried out.

Regarding the device, the measuring station may further comprise a means for displaying the thickness value 27. The thickness value may be a predetermined threshold thickness value, as is the case when used in the method of the present invention. In another embodiment, it may be an absolute value as measured by the measuring means.

Preferably, the device is such that a carrier 14 for the sample is present. The carrier may be any type of container capable of holding the sample. Preferably, the carrier is a standard cassette commonly used in histology.

Furthermore, the present device may comprise preset offset values. Thus, when a specific carrier is used, the measurement means are already pre-calibrated such that the measurement of the sample itself is accurate. The device may comprise a plurality of such preset offset values. These may be selectively activated by means on the measurement station 23. In the embodiment shown in Fig. 2, there are 3 possible preset offset values, for example, small, medium or large. The selected preset offset value may be displayed on the measuring station. Typically, this is done by using lights 24 to indicate which value is selected.

This is particularly useful when using, for example, standard carriers having predetermined dimensions. Indeed, in the field of histology in particular, commercially available cassettes are obtainable in varying standard sizes. The present invention allows the device to be preset to these cassettes, such that the thickness measuring means offsets the dimension of the cassette to allow precise measurement of the sample.

Thus, in order to ensure accurate measurement, it is preferable that the measuring means of the device may be calibrated. This may be done as described above, by selecting preset offset values. Alternatively, this calibration may be done automatically, prior to measurement.

Although the device is preferably operated manually, it may also be automated and may be part of an automated system.

The device is particularly suited for use in the field of histology. Indeed, by providing a means of measuring and/or controlling the thickness of a sample, the histology processing procedure is improved. The invention thus provides quality control benefits to the histology processing procedure. By the indication of the correct tissue thicknesses, it is possible to select faster and more appropriate processing protocols for either conventional tissue processors or rapid microwave tissue processors. Microwave tissue processors are for example known from EP 1 605 243.

The present invention thus provides a method which allows the direct measurement of samples, preferably directly in the carrier in which they are to be further processed. In this way, histoprocessing can be accelerated and optimised.

The present invention is further illustrated by means of the following non-limiting examples.

### Example

The following tables (Part A and Part B) show a non-limiting example of conventional processing which can provide significant improvements due to the specimen thickness quality control of the invention:

| Part A | | | | | | | |
|---|---|---|---|---|---|---|---|
| Set max thick ness (mm) | Fixation in Formalin : time, temperature | Solution of 70% Alcohols : time, : temperature | Solution of 90% Alcohols time, : temperature | Solution of 100% Alcohols time, temperature | Solution of 100% Alcohols : time, temperature | Solution of 100% Alcohols time, : temperature | Solution of 100% Alcohols time, temperature |
| 4 | 40 min, 50°C | 10 min, 45-55°C | 10 min, 45-55°C | 15 min, 45-55°C | 20 min, 45-55°C | 20 min, 45-55°C | 35 min, 45-55°C |
| 6 | 60 min, 50°C | 5 min, 45-55°C | 10 min, 45-55°C | 15 min, 45-55°C | 40 min, 45-55°C | 50 min, 45-55°C | 50 min, 45-55°C |

| Part B | | | | | | |
|---|---|---|---|---|---|---|
| Set maximum thickness (mm) | Xylene: time, temperature | Xylene: time, temperature | Xylene: time, temperature | Wax : time, temperature pressure | Wax : time, temperature pressure | Wax : time, temperature pressure |
| 4 | 10 min, 45-55°C | 25 min, 45-55°C | 35 min, 45-55°C | 25 min, 60°C, 500mBar | 35 min,60°C, 500 mBar, | 45 min, 60°C, 500 mBar |
| 6 | 35 min, 45-55°C | 40 min, 45-55°C | 50 min, 45-55°C | 35 min, 45-55°C, 500 mBar | 50 min,60°C, 500 mBar, | 65 min, 60°C, 500 mBar |

## Claims

1. A quality control method for improving histoprocessing of an organic tissue sample comprising the steps of:
a. Setting a maximum organic tissue sample thickness value
b. Setting the histoprocessing parameters as a function of the set maximum tissue sample thickness value
c. Grossing the tissue sample to be processed
d. Setting the set maximum thickness value as a threshold value on a thickness measurement device
e. Measuring the thickness of the tissue sample using the thickness measurement device, said device comprising a contactless measuring means and comprising means for automatically indicating whether the thickness of the cut sample is above or below the set threshold value
f. In the case that the thickness of the cut sample is below the set threshold value, processing the sample using the parameters determined in step b.

2. Method according to claim 1, wherein the maximum organic tissue sample thickness value is 5mm, preferably 3mm, most preferably 2mm.

3. Method according to any of claim 1 or 2, wherein the histoprocessing parameters comprise the type of solvent, the amount, the temperature, and the time of solvent treatment.

4. Method according to any of the preceding claims, wherein the means for automatically indicating whether the thickness of the cut sample is above or below the set threshold value are visual and/or acoustic.

5. Method according to any of the preceding claims, wherein the thickness measurement device comprises a laser-based measurement means.

6. Method according to claim 5, wherein the measurement means comprise a laser sensor having a resolution of 50-100 microns, preferably 80 microns.

7. Use of a tissue sample measurement device for measuring the thickness of an organic tissue sample in a method according to any of claims 1 to 6, said device comprising
a. a base plate (11) for placing the sample (13),
b. a contactless thickness measuring means for measuring the distance from the top of the surface of the sample to the base plate.

## Patentansprüche

1. Qualitätssicherungsverfahren zur Verbesserung der histologischen Verarbeitung einer organischen Gewebeprobe umfassend die Schritte:
a. Festlegen eines Maximalwertes für eine Dicke der organischen Gewebeprobe
b. Festlegen der histologischen Verarbeitungsparameter als eine Funktion des festgelegten Maximalwertes für die Dicke der Gewebeprobe
c. grob Schneiden der Gewebeprobe, die verarbeitet werden soll
d. Festlegen des festgelegten Maximalwertes für die Dicke als ein Grenzwert auf einer Messvorrichtung für die Dicke
e. Messen der Dicke der Gewebeprobe unter Verwendung der Messvorrichtung für die Dicke, wobei die Vorrichtung ein kontaktloses Messmittel umfasst und Mittel umfasst, um automatisch anzuzeigen, ob die Dicke der geschnittenen Probe oberhalb oder unterhalb des festgelegten Grenzwertes liegt
f. In dem Fall, dass die Dicke der geschnittenen Probe unterhalb des festgelegten Grenzwertes liegt, Verarbeiten der Probe unter Verwendung der Parameter, die in Schritt b festgelegt wurden.

2. Verfahren nach Anspruch 1, wobei der Maximalwert für die Dicke der organischen Gewebeprobe 5 mm, vorzugsweise 3 mm, am meisten bevorzugt 2 mm ist.

3. Verfahren nach einem der Ansprüche 1 oder 2, wobei die histologischen Verarbeitungsparameter den Lösemitteltyp, die Menge, die Temperatur und die Zeit der Lösemittelbehandlung umfassen.

4. Verfahren nach einem der vorstehenden Ansprüche, wobei die Mittel, um automatisch anzuzeigen, ob die Dicke der geschnittenen Probe oberhalb oder unterhalb des festgelegten Grenzwertes liegt, visuell und/oder akustisch sind.

5. Verfahren nach einem der vorstehenden Ansprüche, wobei die Messvorrichtung für die Dicke ein laserbasiertes Messmittel umfasst.

6. Verfahren nach Anspruch 5, wobei das Messmittel einen Lasersensor mit einer Auflösung von 50 - 100 Mikrometern, vorzugsweise von 80 Mikrometern umfasst.

7. Verwendung einer Gewebeprobemessvorrichtung, um die Dicke einer organischen Gewebeprobe mit einem Verfahren nach einem der Ansprüche 1 bis 6 zu messen, wobei die Vorrichtung umfasst
a. eine Basisplatte (11), um die Probe (13) anzuordnen,
b. ein kontaktloses Messmittel für die Dicke, um den Abstand von der Oberseite der Oberfläche der Probe bis zu der Basisplatte zu messen

## Revendications

1. Procédé de contrôle de qualité pour améliorer le traitement histologique d'un échantillon de tissu organique, ledit procédé comprenant les étapes de :
a. réglage d'une valeur maximale de l'épaisseur de l'échantillon de tissu organique,
b. réglage des paramètres de traitement histologique en fonction de la valeur maximale réglée de l'épaisseur de l'échantillon de tissu,
c. découpage grossier de l'échantillon de tissu à traiter,
d. réglage de la valeur maximale réglée de l'épaisseur en tant que valeur de seuil sur un dispositif de mesure d'épaisseur,
e. mesure de l'épaisseur de l'échantillon de tissu en utilisant le dispositif de mesure d'épaisseur, ledit dispositif comprenant un moyen de mesure sans contact et des moyens pour indiquer automatiquement si l'épaisseur de l'échantillon découpé se trouve au-dessus ou au-dessous de la valeur de seuil réglée,
f. dans le cas où l'épaisseur de l'échantillon découpé se trouve au-dessous de la valeur de seuil réglée, traiter l'échantillon en utilisant les paramètres déterminés à l'étape b.

2. Procédé selon la revendication 1, dans lequel la valeur maximale de l'épaisseur de l'échantillon de tissu organique est de 5 mm, de préférence 3 mm, le plus préférablement de 2 mm.

3. Procédé selon l'une quelconque des revendications 1 ou 2, dans lequel les paramètres de traitement histologique comprennent le type de solvant, la quantité, la température, et le temps de traitement du solvant.

4. Procédé selon l'une quelconque des revendications précédentes, dans lequel les moyens pour indiquer automatiquement si l'épaisseur de l'échantillon découpé se trouve au-dessus ou au-dessous de la valeur de seuil réglée sont des moyens visuels et/ou acoustiques.

5. Procédé selon l'une quelconque des revendications précédentes, dans lequel le dispositif de mesure d'épaisseur comprend un moyen de mesure à laser.

6. Procédé selon la revendication 5, dans lequel les moyens de mesure comprennent un capteur de laser ayant une résolution de 50 à 100 microns, de préférence 80 microns.

7. Utilisation d'un dispositif de mesure d'échantillon de tissu pour mesurer l'épaisseur d'un échantillon de tissu organique dans un procédé selon l'une quelconque des revendications 1 à 6, ledit dispositif comprenant
a. une plaque de base (11) pour placer l'échantillon (13),
b. un moyen de mesure sans contact de l'épaisseur pour mesurer la distance de l'extrémité supérieure de la surface de l'échantillon à la plaque de base.
